# EUROPEAN PATENT APPLICATION

(11) **EP 2 339 492 A1**
(43) Date of publication of application: **29.06.2011**
(21) Application number: 09178687.1
(22) Date of filing: 10.12.2009
(51) Int. Cl.: G06F 21/00

(54) **Authentication in a building control system**

(71) Applicant: Schneider Electric Buildings AB, 213 75 Malmö (SE)
(72) Inventor: Nilsson, Per, 241 38, ESLÖV (SE)
(74) Representative: Stenbäck, Maria Elisabeth

(57) **Abstract**

A domain based concept is useful to handle user management in large building control systems. A domain is associated with permissions, user accounts, groups, workspaces and servers. A server may be a domain controller or a member. A user account of a particular domain is allowed access to a plurality of servers in this particular domain. During the log in process the log-in information is submitted to a server. The server then performs a client database look-up either locally in its own database or remotely on another domain controller to authenticate the user credentials. If the submitted information is correct, access to the server may be granted and a local user token is created and stored in the server.

## Description

### Technical Field

The present invention relates to a building control system in general, and in particular to a method, a server and a computer program for, in a building control system, handling user management.

### Background

It is common to control different systems, such as control systems for heating, ventilation and air conditioning (HVAC), security, lighting, asset management or other facility management control systems, in various kinds of buildings.

A computer based building control system may comprise of a large number of servers and field devices. It is usually operatively connected to one or more computer networks, both local networks (intranet) and a global network (internet). There can be a large number of workstations, such as personal computers, which are arranged to provide user access to the building control system, either through a regular internet browser or by specialized client applications. In general, different categories of users (such as engineers, maintenance personnel, end-users, and administrators) should have access to different levels of information in the building control system. They would also benefit from having the user interface adapted to their particular role(s).

### Summary of the Invention

In view of the foregoing, it is thus an object of the present invention to provide an improvement of the prior art, thereby solving or at least mitigating the above mentioned issues. More particularly, it is an object to provide a method, a server and a computer program for handling user management in a building control system.

Hence, according to a first aspect there is provided a method in a server for handling authentication and authorization in a building control system, comprising receiving a request for log-in to the building control system, the request being associated with a user account and comprising user credentials; authenticating the user credentials by performing a client database look-up based on the user credentials; in response to the user credentials being authenticated, compiling authorization information associated with the user account, thereby generating a local user token for the user account; and wherein account information represented in the local user token authorizes access to at least one second server being a member of a domain associated with user credentials for the user account when provided to an authorization process of the at least one second server.

The domain concept provides a single point of configuration; regardless of client/server multiplicity there is only one element of configuration work regarding adding/configuring user information in the system. Once the local user token is resolved the server does not need to send further requests to the (potentially remote) client database during the remainder of the session. In addition the local user account enables individually based rights, user friendliness, etc.

The account information may comprise user-specific information required for the user account to be authorized to access the at least one second server in the building control system. Thereby the number of requests to the server performing the authentication may be minimized since necessary information is comprised in the thus generated local user token.

The user credentials may comprise at least two from a user name, a user password and domain name.

The local user token may comprise permission information required for authorization. The account information may comprise a password. The account information may be encapsulated in the local user token. The local user token may comprises a reference to the account information. By comprising a reference to the account information the data needed to store the local user token may be minimized.

The local user token may comprise user interface information. The information may be based on groups, etc. Thereby more individually adapted user interfaces may be achieved. For example, a user does not have to see unnecessary items on user interface, and is also hindered from reading/writing/editing/accessing for him classified information.

The method may further comprise, extracting information from the local user token; and writing the extracted information to the authorization process. Thereby the user may be authenticated to the server associated with the authorization process.

The method may further comprise storing the local user token in a memory of the server. Thereby the local user token may be re-used during access to additional servers.

The method may further comprise receiving a request for log-out from the building control system; and in response thereto removing the user token from the memory. Hence further actions may require new authentication to be performed, thereby reducing the risk of un-authorized access and thereby increasing security.

The client database look-up may be performed in a domain controller physically separated from the server. Thereby a single point of configuration is enabled. This may reduce the need to handle redundant information.

The method may further comprise analyzing user account information and analyzing information in groups associated with the user account. This may also simplifies configuration and enable easy changing or adding of a new user to the system.

The domain may be associated with permissions, user accounts, groups, workspaces and/or servers.

The server may be a local server, and the method may further comprise, by the local server, authorizing the user account access to a remote server, the remote server being a member of the same domain as the local server.

The method may further comprise translating authentication information from a Windows based operating system to an operating system of the building control system.

According to a second aspect of the invention there is provided a server for handling authentication and authorization in a building control system, comprising means for receiving a request for log-in to the building control system, the request being associated with a user account and comprising user credentials; means for authenticating the user credentials by performing a client database look-up based on the user credentials; means for in response to the user credentials being authenticated, compiling authorization information associated with the user account, thereby generating a local user token for the user account; and wherein account information represented in the local user token authorizes access to at least one server being a member of a domain associated with user credentials for the user account when provided to an authorization process of the at least one server.

According to a third aspect of the invention, there is provided a computer program stored on a computer readable medium, which comprises software instructions that, when executed in a computer, performs a method for handling authentication and authorization in a building control system as disclosed above. Such a computer program enables for efficient implementation of the method in a server as disclosed above.

The second and third aspects may generally have the same features and advantages as the first aspect.

Generally, all terms used in the claims are to be interpreted according to their ordinary meaning in the technical field, unless explicitly defined otherwise herein. All references to "a/an/the [device, event, message, alarm, parameter, step etc.]" are to be interpreted openly as referring to at least one instance of said device, event, message, alarm, parameter, step etc., unless explicitly stated otherwise. The steps of any method disclosed herein do not have to be performed in the exact order disclosed, unless explicitly stated.

### Brief Description of the Drawings

Embodiments of the present invention will now be described, by way of example, with reference to the accompanying schematic drawings, in which
Fig. 1 is a schematic view of a system according to an embodiment,
Fig. 2 is a schematic view of a system according to an embodiment,
Fig. 3 is an example of a local user token oriented model,
Fig. 4 is a flowchart according to an embodiment, and
Fig. 5 is a flowchart according to an embodiment.

### Detailed Description of Preferred Embodiments

The present invention relates to user authentication and authorization in a scalable multi-server environment as well as establishing trusted communication between servers. The configuration requires a minimum of information provided by the administrator whilst still supporting large-scale systems.

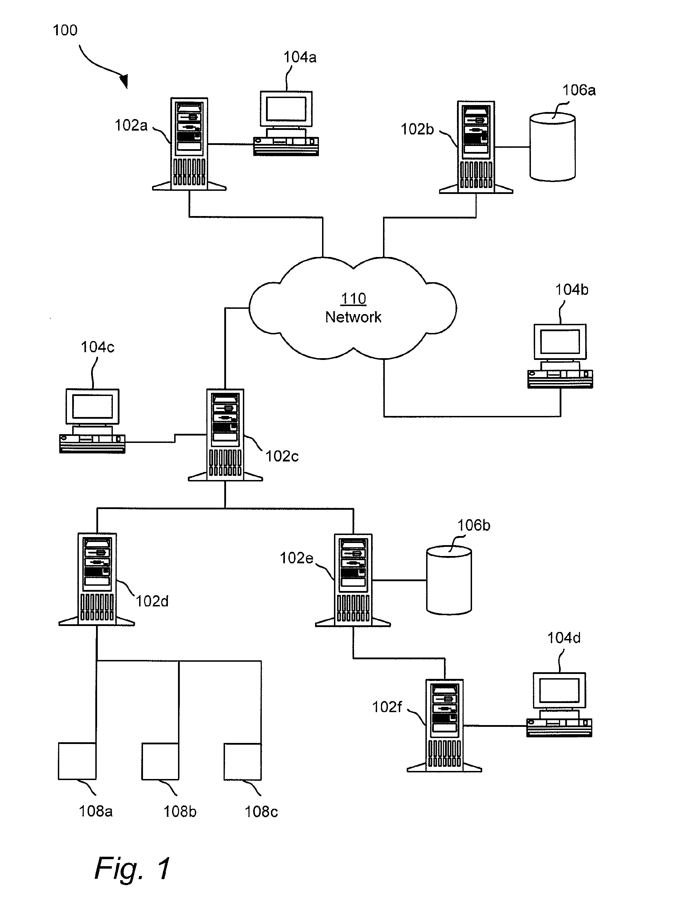

Embodiments for account management functionalities (such as log-in), user profile management, user's permissions and authentication will now be described. Figure 1 illustrates an example of a building control system 100. The system 100 comprises servers 102a, 102b, 102c, 102d, 102e, 102f. Servers 102a, 102b, 102c, 102d, 102e, 102f may store information, control programs, user interfaces, etc. associated with the building control system 100 (such as control thereof and access and/or authorization thereto). For example, the servers 102a, 102b, 102c, 102d, 102e, 102f may store data and execute control programs and thereby controlling field devices 108a, 108b, 108c. The field devices 108a, 108b, 108c may be typical HVAC field devices. The servers 102a, 102b, 102c, 102d, 102e, 102f may also store information indirectly via databases 106a, 106b. The information stored in the servers 102a, 102b, 102c, 102d, 102e, 102f and databases 106a, 106b may be accessed from user terminals 104a, 104b, 104c, 104d. The servers 102a, 102b, 102c, 102d, 102e, 102f are operatively connected via a network 110 which may be wired, wireless or a combination of both.

The below embodiments are based on a general domain based concept which can be useful to handle user management in large building control systems. A domain may be associated with permissions. In other words, it may be required that an entity requesting access to a certain domain has permission to said certain domain in order to gain access to said certain domain. The domain may also be associated with user accounts. In other words, only entities associated with certain user accounts may be allowed to gain access to a particular domain. User accounts will be further disclosed below. The user accounts can carry permissions and references to groups. The groups may also carry permissions and workspaces. Thus, the domain may be associated with groups. In other words, only entities associated with a certain group may be allowed to gain access to a particular domain. A group may correspond to a plurality of user accounts associated with a particular field of work. A first group may correspond to engineers whilst a second group may correspond to maintenance personnel, etc. Furthermore, the domain may be associated with workspaces. A workspace may correspond to a user interface. The domain may also be associated with particular servers.

In the exemplary system 100 of Fig. 1 a first domain may correspond to server 102a, whilst a second domain may correspond to server 102b and a third domain may correspond to servers 102c, 102d, 102e and 102f. Alternatively, a single server 102a, 102b, 102c, 102d, 102e, 102f may be associated with a plurality of domains, wherein each domain, for example, is associated with particular permissions, user accounts, groups and/or workspaces.

A server 102a, 102b, 102c, 102d, 102e, 102f may function as a domain controller (DC server) or as a member (M server). Usually there is only one DC server in each domain. The remaining servers (the M servers) in the same domain are operatively connected to the DC server of that domain. The servers 102a, 102b, 102c, 102d, 102e, 102f may be operatively connected in a hierarchical fashion, wherein the DC server acts as the root and wherein the M servers act as leafs. In general, a user account in domain D is allowed to access all of the servers in domain D, assuming that the user account fulfils necessary conditions. If a new user account is added to the system 100 the user account is added as a new user account on the DC server only.

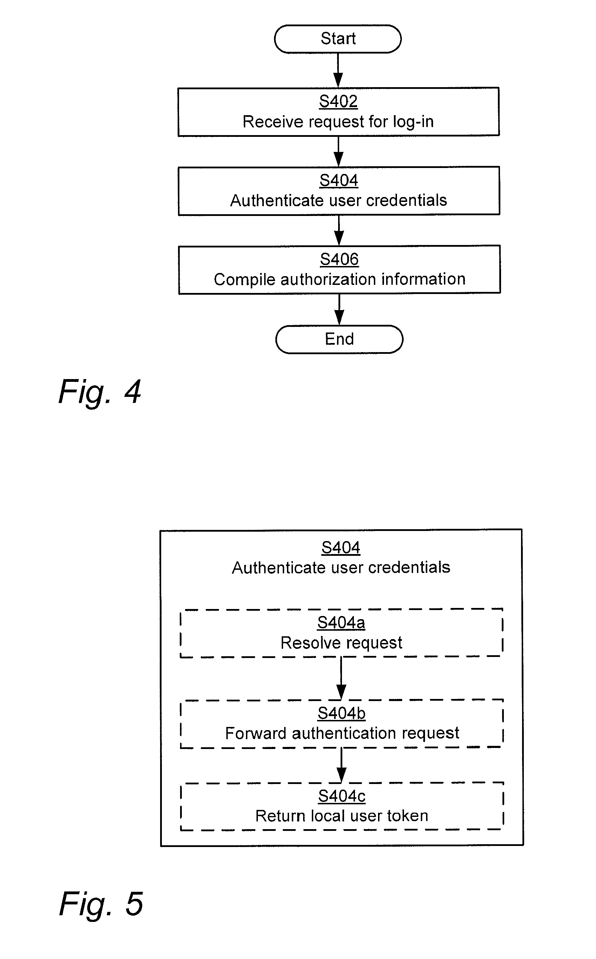

A method in a server for handling authentication and authorization in a building control system will now be described with references to the flowchart of Figure 4.

In a step S402 a server 102a, 102b, 102c, 102d, 102e, 102f receives a request for log-in to the building control system 100. The log-in request may be viewed as an authorization request, whereby in response to the authorization request information is provided regarding what a user of the user account is allowed to perform in the system 100. During the log-in process a client submits log-in information represented by user credentials to a server 102a, 102b, 102c, 102d, 102e, 102f. The request is typically submitted by a user via a user interface of a web server, such as a user interface of a user terminal 104a, 104b, 104c, 104d, wherein the web server runs as a computer program application on the user terminal 104a, 104b, 104c, 104d. Thus the request is associated with a user account. The requests comprises user credentials. The user credentials may comprise at least two from a user name, a user password and domain name. Thereby the server 102a, 102b, 102c, 102d, 102e, 102f may resolve the identity of the sender of the request and the requested domain.

The server 102a, 102b, 102c, 102d, 102e, 102f then performs a client database look-up either locally in its own database or remotely in a database of another DC server to authenticate the user credentials. The user credentials are thus authenticated, in a step S404, by performing a client database look-up based on the user credentials. According to embodiments such authentication is always performed on a DC server. Thus, in such a case, if a user is logging in to a sever that acts as an M server of the requested domain, i.e. it does not act as a DC server, the server calls a remote DC server to perform the authentication.

If the submitted information is correct, access to the server may be granted and a local user token is instantiated, or created, and stored in the local server. Particularly, in a step S406 authorization information associated with the user account is compiled in response to the user credentials being authenticated. The authorization information may be complied directly (by checking information associated with the user account as *such*) or indirectly (*inter alia* by checking group memberships associated with the user account). Thereby a local user token for the user account is generated. In this context the term "generating a local user token" has the same technical meaning as the terms "instantiating a local user token" and "creating (an instance of) a local user token". The thus generated local user token may comprise the authorization information. The content of the local user token may be resolved by analyzing the user account information as well as analyzing the information in the groups the user account is associated with.

Account information represented in the local user token authorizes access to at least one second server (i.e. not the same server as the server for which the local user token was created) being a member of a domain associated with user credentials for the user account when provided to an authorization process of the at least one second server. Information from the local user token may thus be extracted when account information is provided to the second server. Further, the extracted information may be written to the authorization process. Thus when access to a second server is requested the second server, according standard operating procedures, requires the corresponding user account to be authenticated. According to standard operating procedures the user would the need to re-submit the user credentials in order for the second server to authorize the user account by resolving the user credentials. This cumbersome process is avoided by using information provided in the disclosed local user token which carries necessary information for the second server to grant the user account access to the second server.

The account information may be encapsulated in the local user token. Alternatively the local user token may comprises a reference to the account information. For example, the account information of the local user token may comprise user-specific information required for the user account to be authorized to access the above mentioned at least one second server in the building control system. As an example the account information may comprise a password. The local user token may hold permission information required by authorization as well as user interface information. The user interface information may be based on groups, etc. For example, the local user token may comprise information pertaining to the domain name, a user name of the user account, a user identification, permissions, passwords, and/or a time stamp representative of the time when the user account was logged in.

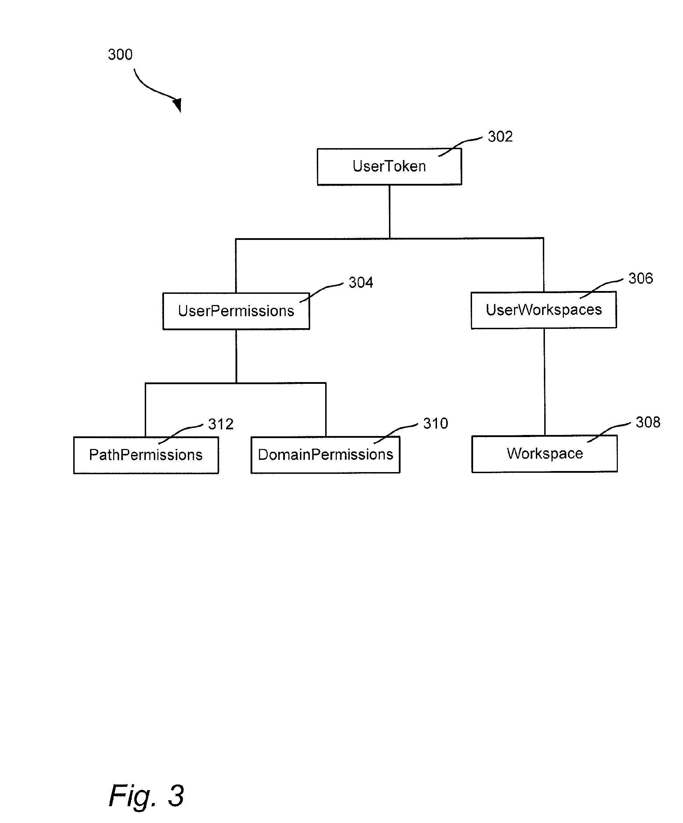

Figure 3 provides an example of a local user token oriented model. The entities of Figure 3 may be generated and set up during log-in; cached if retrieved from a remote DC server; discarded on log-out (or cache expiry). Thus, when a user successfully logs in to a domain, a local user token is saved to enable access at a later time even if the connection to the domain controller is temporarily lost. The local user token may thus be stored in a memory of the server. When receiving a request for log-out from the building control system the local user token may be removed from the memory. The UserToken entity represents the local user token of an authenticated user in the system. Exemplary data of a local user token are provided in the below table:

| Data | Description |
|---|---|
| DomainName | The name of the corresponding domain the user account is associated with |
| UserName | The user's log-in name |
| UserlD | The (globally) unique identifier associated with the corresponding user account |
| Password | The user's password. One purpose of storing it in the UserToken is to enable remote authentication when a DC server is temporarily unavailable |
| LogInTime | Time stamp holding the time of log-in. Primarily used to determine if a saved UserToken has expired. Also used to determine the life time of the corresponding user session |
| DomainPermissions | Collection of all domain permissions the user is associated with, either directly or indirectly through group membership |
| PathPermissions | Collection of all path permissions the user is associated with, either directly or indirectly through group membership |
| CommandPermissions | Collection of all command permissions the user is associated with, either directly or indirectly through group membership |
| Workspaces | Collection of available Ul elements the user is associated with, either directly or indirectly through group membership |

The local user token may be represented as a class as well as a definition in a general programming language. The definition may be used when transferring local user tokens between servers and when persisting a local user token in a collection of saved local user tokens.

UserPermissions provides encapsulation of the permissions applicable for the user. This information may be collected by traversing all groups the user is associated with.

UserWorkspaces contains workspaces that are associated with the user. This information may be collected by traversing all groups the user is associated with.

UserProfile is responsible for encapsulating user profile data stored in the UserData entity and typically represents data such as (but not limited to), first name, last name, address, Email address, phone numbers, etc. of the user.

UserData associates arbitrary string-data with a specific user account. Given the data ID and a user ID any application, tool or plug-in in the system 100 can associate string-data with a user. For example localization settings that are to be "roaming" may be stored this way. Data may be resolved as per request, not automatically transferred as part of the log-in process.

The GroupAccount serves as an association point for the user account and is primarily holding an identification and a name. It also holds the GroupPermissions for the specific group.

In response to successful authentication and authorization a new user session, given the local user token, may be created. The user session may then carry the local user token. The local user token may thereby through the user session be accessed by other components in the server (and client). A user session carrying a local user token is one way of defining a user to be logged in to the server. A session identifier of the user session may be submitted to the Web server of the user terminal 104a, 104b, 104c.

During the log-in process, the server may store the local user token together with the user session. The local user token carries the user's permissions that provide means for performing authorization queries even though the user account itself may be stored in another server (such as the DC server). Client side authorization is performed in the server. Whenever an object or property is requested, the communicating sequential protocol (CSP) server configures the data "on the fly" as set by the permissions, for example by applying ReadOnly attributes etc. where appropriate.

Profiles are entities storing user and/or user group specific data. Similarly, a group profile may carry group specific profile data such as available workspaces, the default workspace of group members etc. A server that holds account information also provides profile association. An external catalogue service, such as an active directory (AD), may provide limited account specific information. In the situation of an existing AD, a platform (P) server is configured to be the "profile provider" for the AD accounts.

Workspaces may be associated with such profiles. Workspace information may be divided into two parts; workspace and workspace layout. The workspace contains a set of available graphical user interface (GUI) components and may be centrally stored (on a server) together with the profile information. Alternatively it may be part of the profile information. The workspace may further provide layout definitions of components of the GUI. The workspace may be administered centrally (i.e. not individually by users). The workspace layout carries individual user interface (UI) adjustments as specified by user accounts. For example the user account may specify the workspace to be extended with explicit coordinates for the GUl components. The workspace layout is typically stored locally in the client.

The client profile information comprises the workspace layout, information pertaining to the latest workspace, the latest server, the latest user and may be stored on a per client user level.

Accounts are entities representing information associated with users and groups. As such, accounts may only associate information with user account that must be associated with user accounts. Further there may not be any overlapping of user account contents and group account contents (i.e. permission data may not be comprised in both).

For remote log-in step S404 in the sequence diagram of Figure 4 may be expanded as disclosed in the flowchart of Figure 5, which illustrates a method for performing remote log-in according to an embodiment. In the sequence diagram of Figure 5 it is at step S404a resolved that the requested domain is configured as an domain member carrying the address to a specific remote server. The authenticate request is forwarded at step S404b and a local user token, carried by the communicating sequential protocol (CSP) delivered to the local server, is returned at step S404c. The local user token is then returned and the flow chart of Figure 4 proceeds at step S406. There may be a number of entities between the local account access server and the remote account access server, such as a CSP client and a CSP server, for providing means for server-to-server communication.

Further, servers that are members of the same domain are considered "trusting" each other. A password is associated with the domain and is as such a "shared secret" all domain members know. This is utilized in server-server communication, thereby eliminating the need of having a user/domain/password element configured just for establishing such server-server communication. In other words, once the user is authenticated in the system all actions are authorized in the client-server communication and no any additional, redundant, authorization will be invoked even if the user's action results in communication across server boundaries. The local user token thus ensures identity of a user account. However, in exceptional situations, such as server-server communication over a non-secured connection and/or network, it may be required that a new separate authentication process is initiated at the remote server and thus that a new separate local user token is generated.

Logging in using SID based information (from, for example, a Microsoft Windows domain) is similar to the method disclosed above. During authentication an authentication check may be performed by a Microsoft Windows application programming interface (API) call to determine if the provided domain and SID relation is correct. Group membership may be resolved by using Windows APl lookup to retrieve a Microsoft Windows domain group membership. This membership may then be mapped to group membership using the SID's group membership in the Windows domain and mapping those group names to an "External Name" property of the group element. Using the resolved group membership, permissions and workspaces etc may be resolved and a local user token may be returned using the same pattern as the local domain model. Authentication information may thereby be translated from a Microsoft Windows based operating system to an operating system of the building control system. Hence the disclosed user management system is transparent, meaning that, for example, groups may be associated with groups in the Microsoft Windows domain. The system may also be transparent (in terms of operating system - such as Linux or Microsoft Windows) in other authentication aspects. As such the local user token encapsulates the authentication model that is in effect.

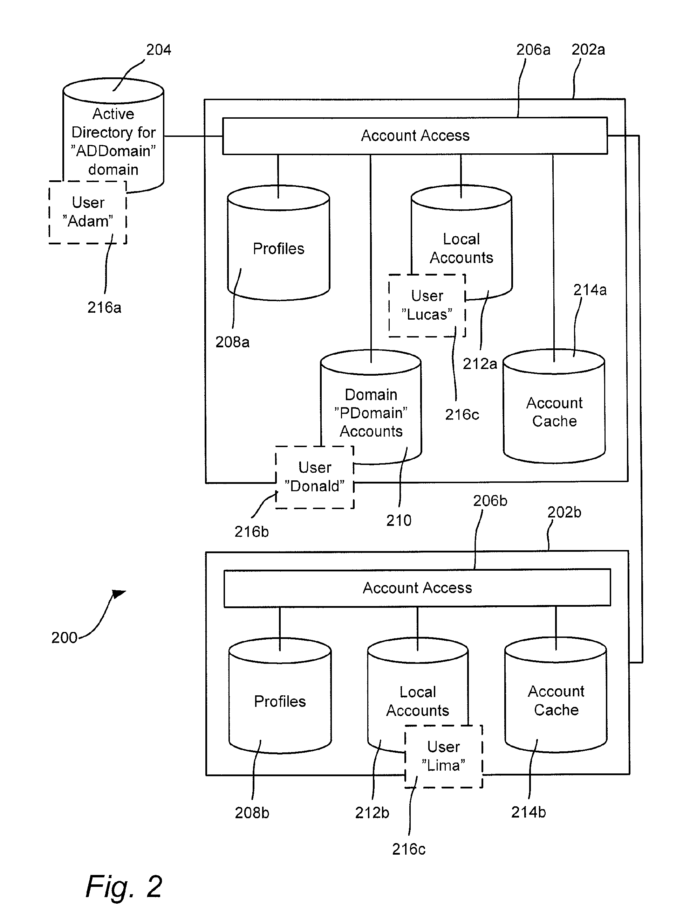

Figure 2 schematically illustrates a system 200 comprising a first server 202a, a second server 202b and a Windows domain, for example defined in an active directory (AD) 204 associated with a domain "ADDomain". Without losing generality it is assumed that the first server 202a acts as the DC server. As *such* it may hold and/or have access to a database of domain user accounts, i.e. user accounts that can log in to any server in a domain associated with the DC server 202a. Server 202b is a server that will only authenticate the local user "Lima". For any other authentication server 202b may either redirect the authentication query to a configured domain controller, i.e. server 202a. Account access 206a, 206b are common server core modules responsible for encapsulating user access and account access of each server 202a, 202b. The account access 206a, 206b provide an interface for internal queries but also means of providing an object model. The account access modules 206a, 206b also provide means for configuring and managing properties on a domain level.

The below table illustrates how the servers 202a, 202b would handle authentication and store various user related information according to exemplary situations. In the below table the notation "[X → Y]" denotes that a user account ("Adam", "Donald", "Lucas", or "Lima") of server "X" requests log-in to domain "Y".

| User \ Server | Server 202a | Server 202b |
|---|---|---|
| ADDomain \Adam | [Server 202a → ADDomain] Server 202a is configured to authenticate "ADDomain" users using the AD by performing SID based group lookup. | [Server 202b → ADDomain] Server 202b is configured to authenticate "ADDomain" users using the AD by redirecting authentication request to server 202a. |
| PDomain \Donald | [Server 202a → PDomain] Server 202a is configured to administer and authenticate "PDomain" users, i.e. is a domain controller for "PDomain" users. No external authentication is involved. | [Server 202b → PDomain] Server 202b is configured to authenticate "PDomain" users by querying the DC server 202a. Credentials are cached to enable future login with disconnected DC. Profile data that is changed or saved is stored in "Profiles" database of server 202a. |
| Lucas | [Server 202a → Local] "Lucas" is a local user of server 202a. Thus administered and authenticated by server 202a. Profile data that is changed or saved is stored in "Profiles" database of server 202a. | [Server 202b → Local] Log-in failure. Cannot log in using another server's local user. |
| Lima | [Server 202a → Local] Log-in failure. Cannot log in using another server's local user. | [Server 202b → Local] "Lima" is a local user of server 202b. Thus administered and authenticated by server 202b. Profile data that is changed or saved is stored in "Profiles" database of server 202b. |

It will be appreciated that a person skilled in the art can modify the above-described embodiments in many ways and still use the advantages of the invention as shown in the embodiments above. Thus, the invention should not be limited to the shown embodiments but should only be defined by the appended claims.

## Claims

1. A method in a server for handling authentication and authorization in a building control system, comprising
- receiving a request for log-in to said building control system, said request being associated with a user account and comprising user credentials;
- authenticating said user credentials by performing a client database look-up based on said user credentials;
- in response to said user credentials being authenticated, compiling authorization information associated with said user account, thereby generating a local user token for said user account, wherein account information represented in said local user token authorizes access to at least one second server being a member of a domain associated with user credentials for said user account when provided to an authorization process of said at least one second server.

2. The method according to claim 1, wherein said account information comprises user-specific information required for said user account to be authorized to access said at least one second server in said building control system.

3. The method according to claim 1 or 2, wherein said local user token comprises permission information required for authorization.

4. The method according to any one of the preceding claims, wherein said account information comprises a password.

5. The method according to any one of the preceding claims, wherein said local user token comprises user interface information.

6. The method according to any one of the preceding claims, wherein said account information is encapsulated in said local user token.

7. The method according to any one of claims 1 to 5, wherein said local user token comprises a reference to said account information.

8. The method according to any one of the preceding claims, further comprising,
- extracting information from said local user token; and
- writing said extracted information to said authorization process.

9. The method according to any one of the preceding claims, wherein said client database look-up is performed in a domain controller physically separated from said server.

10. The method according to any one of the preceding claims, wherein said user credentials comprises at least two from a user name, a user password and domain name.

11. The method according to any one of the preceding claims, further comprising
- analyzing user account information and analyzing information in groups associated with said user account.

12. The method according to any one of the preceding claims, wherein said server is a local server, said method further comprising
- by said local server, authorizing said user account access to a remote server, said remote server being a member of the same domain as said local server.

13. The method according to any one of the preceding claims, further comprising
- translating authentication information from a Windows based operating system to an operating system of said building control system.

14. A server for handling authentication and authorization in a building control system, comprising
- means for receiving a request for log-in to said building control system, said request being associated with a user account and comprising user credentials;
- means for authenticating said user credentials by performing a client database look-up based on said user credentials;
- means for in response to said user credentials being authenticated, compiling authorization information associated with said user account, thereby generating a local user token for said user account; and wherein account information represented in said local user token authorizes access to at least one server being a member of a domain associated with user credentials for said user account when provided to an authorization process of said at least one server.

15. A computer program stored on a computer readable medium, which comprises software instructions that, when executed in a computer, performs a method according to any one of claims 1-13.
